(19) Europäisches Patentamt
European Patent Office
Office européen des brevets

(11) Numéro de publication: **0 175 624**
**B1**

(12) # FASCICULE DE BREVET EUROPEEN

(45) Date de publication du fascicule du brevet: **26.10.88**

(21) Numéro de dépôt: **85420148.0**

(22) Date de dépôt: **07.08.85**

(51) Int. Cl.⁴: **C 08 G 18/10**, C 08 G 18/67, C 07 C 131/00, C 08 F 283/00, C 08 L 75/04 // (C08L75/04, 39:00)

(54) **Compositions à base de polyuréthane et comportant un polymère d'oxime éthylénique, procédé de préparation desdites compositions et leurs utilisations.**

(30) Priorité: **08.08.84 FR 8412718**

(43) Date de publication de la demande: **26.03.86 Bulletin 86/13**

(45) Mention de la délivrance du brevet: **26.10.88 Bulletin 88/43**

(84) Etats contractants désignés: **BE DE GB IT LU NL**

(56) Documents cités:
**US - A - 3 457 326**
**US - A - 4 350 801**

**MACROMOLECULES, vol. 16, no. 10, octobre 1983, pages 1561-1563, American Chemical Society, Murray Hill, N.J., US; L.D. TAYLOR et al.: "Synthesis and properties of poly[N-(1,1-dimethyl-3-oxobutyl)acrylamide oxime]"**
**CHEMICAL ABSTRACTS, vol. 100, no. 10, 5 mars 1984, page 3, no. 68788b, Columbus, Ohio, US; TADATOSHI OTA: "Studies on the polymerization of vinyl oximes. II. Effects of unsaturated aldehyde and ketone oximes on the retardation of radical polymerizations"**

(73) Titulaire: **HEXCEL-GENIN Société Anonyme:, 3, avenue Condorcet B.P. 1208, F-69608 Villeurbanne Cédex (FR)**

(72) Inventeur: **Berthier, Jean-Marc, Rue du Docteur Gauthier, F-38630 Les Avenières (FR)**
Inventeur: **Lissac, Pierre, 75 Bis, Rue Chazière, F-69004 Lyon (FR)**
Inventeur: **Camberlin, Yves, 68bis, Quai Clémenceau, F-69300 Caluire (FR)**
Inventeur: **Pascault, Jean-Pierre, 40, rue Château-Guillard, F-69100 Villeurbanne (FR)**

(74) Mandataire: **Ropital-Bonvarlet, Claude et al, Cabinet BEAU DE LOMENIE 99, Grande rue de la Guillotière, F-69007 Lyon (FR)**

**EP 0 175 624 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne des compositions à base de polyuréthanes et comportant un polymère d'oxime éthylénique, procédé de préparation desdites compositions et utilisations de ces compositions, notamment pour l'enduction et le moulage.

On a déjà décrit la préparation et les diverses utilisations possibles de compositions constituées d'un prépolymère du type polyéther ou polyester de polyuréthane terminé par des groupes isocyanates bloqués et d'un poids équivalent, par rapport aux groupes isocyanates présents, d'une diamine primaire.

On a, également, déjà préconisé l'utilisation, pour réaliser le blocage des groupes isocyanates bloqués, de divers composés, parmi lesquels des cétoximes de formule:

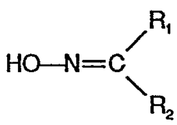

dans laquelle $R_1$ et $R_2$ sont des radicaux aliphatiques ou aromatiques ou forment ensemble un radical cycloaliphatique.

On sait que, lorsqu'un prépolymère, à groupes terminaux isocyanates bloqués, est chauffé en présence de la diamine primaire, il se produit une réaction, dite de déblocage, qui se traduit, d'une part, par un allongement et une réticulation des chaînes du prépolymère et, d'autre part, par une libération de l'oxime utilisée pour réaliser le blocage des groupes isocyanates.

L'oxime ainsi libérée est considérée jusqu'à ce jour, par les techniciens, comme un produit dont la présence dans le polymère final obtenu n'est pas souhaitable et c'est pourquoi on a préconisé l'emploi d'oximes relativement légères et volatiles qui pourront s'éliminer lors de la mise en œuvre (réticulation) du produit. Comme oxime relativement légère et volatile on peut citer la méthyléthyl cétoxime.

Il a été trouvé, et c'est là l'objet de la présente invention, que l'on pouvait avantageusement utiliser la cétoxime, employée comme agent de blocage et libérée lors de la réaction d'allongement des chaînes, pour réaliser une modification intéressante des propriétés des polyuréthanes.

Les compositions polymères conformes à l'invention sont caractérisées en ce qu'elles comportent:

- un polyuréthane, tel qu'obtenu par réaction (a) d'un allongeur de chaîne qui est une diamine primaire avec (b) un prépolymère contenant des groupes isocyanates terminaux à base d'un polyéther, polyester ou polybutadiène hydroxylé, dont les fonctions isocyanate sont bloquées par une cétoxime insaturée vinylique,
- un polymère de ladite cétoxime insaturée vinylique.

L'utilisation de la cétoxime libérée se réalise en polymérisant ladite cétoxime et, de préférence, ultérieurement en réticulant le polymère obtenu.

Pour que l'on puisse effectuer la polymérisation de ladite cétoxime, il convient d'abord que cette cétoxime contienne des doubles liaisons polymérisables par les procédés connus tels, par exemple, que les procédés radicalaires. On utilisera donc, pour effectuer le blocage des groupes isocyanates terminaux des prépolymères, des cétoximes présentant des doubles liaisons et, notamment, des doubles liaisons α-éthyléniques. De telles oximes insaturées peuvent se polymériser spontanément ou sous l'influence de catalyseurs convenables (péroxydes, persels, radiations) selon des mécanismes radicalaires connus.

Les cétoximes utilisables sont donc les produits dont la formule chimique peut s'écrice:

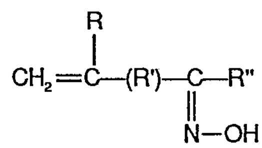

étant entendu que:

- R est soit de l'hydrogène, soit un radical alkyle, R′ est une liaison simple ou un radical quelconque, notamment un radical aliphatique ou un radical amide . . ., ledit radical devant présenter les deux caractéristiques suivantes: ne pas comporter d'atomes ou de groupement d'atomes qui gêneraient la polymérisation de la liaison éthylénique et ne pas comporter d'atomes ou de groupement d'atomes qui empêcheraient la formation du radical oxime sur le carbone voisin,
- R″ est un radical quelconque, alkyle par exemple. Là encore, ce radical doit être choisi de façon à ne pas gêner la formation du radical oxime porté par le carbone voisin.

Les oximes vinyliques utilisables peuvent être préparées par des méthodes connues, à partir des cétones correspondantes, de formule:

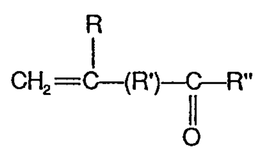

Dans l'état actuel des connaissances, il ne semble pas que de tels prépolymères de polyuréthane, dont les isocyanates terminaux ont été bloqués par lesdites oximes, aient été décrits. Il est clair que la présente demande de brevet couvre égalements lesdits produits chimiques intermédiaires nouveaux.

Parmi les cétones utilisables comme produits de départ, on signalera, en particulier:

- la méthylvinylcétone:

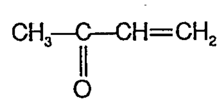

(MVC)

– la N-(1,1 diméthyl-3-oxobutyl)-acrylamide (DAA)

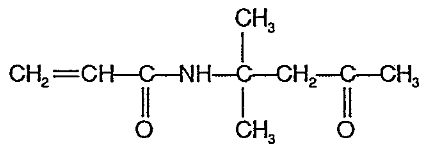

La première cétone (MVC) est un liquide lacrymogène difficile à utiliser.

La deuxième cétone (DAA) est un solide dont le point de fusion, mesuré par DSC, est de 53 °C.

Les oximes présentent les caractéristiques essentielles suivantes.

La méthyl vinyl cétoxime (MVCOX) est un liquide visqueux à température ambiante.

L'oxime de la DAA (DAOX) est un solide blanc cristallisé, dont le point de fusion est de 95 °C. L'augmentation du point de fusion de l'oxime par rapport à la cétone (DAA) est due à la formation de liaisons hydrogène supplémentaires par l'intermédiaire du groupement OH de l'oxime.

La réaction de blocage des groupes isocyanates terminaux des polyéther et/ou polyester, polyuréthanes, prépolymères utilisés s'effectue selon les procédés connus, c'est-à-dire par simple contact entre le prépolymère et une quantité convenable d'oxime. Cette réaction, exothermique, peut être suivie par des procédés connus comme la calorimétrie différentielle (DSC).

La réaction de déblocage s'effectue lorsque l'on chauffe, à une température de l'ordre de 60 à 120 °C, le mélange de prépolymère bloqué avec la diamine primaire. Comme indiqué plus haut, l'oxime vinylique utilisée pour le blocage est alors libérée.

Dans le procédé selon l'invention, on réalise alors la polymérisation de l'oxime vinylique ainsi libérée. Cette polymérisation, qui peut avoir lieu spontanément, est, de préférence, amorcée par des catalyseurs connus, tels que des péroxydes ou des persels ou des radiations. Selon la sensibilité des catalyseurs, la réaction de polymérisation pourra commencer à température plus ou moins basse. On vise, en général, à ce que la polymérisation se produise à partir d'une température d'environ 80 °C, c'est-à-dire dans la même zone de températures où s'effectue la réaction de déblocage et d'allongement-réticulation des chaînes du prépolymère.

A la fin de cette étape de polymérisation de l'oxime, on se trouve en présence d'un polymère réticulé (polyuréthane) contenant une matière polymérique non réticulé (polyuréthane) contenant une matière polymérique non réticulée (ou peu réticulée) qui est le polymère de l'oxime vinylique. Ce mélange a des propriétés intéressantes dans la mesure où il présente, à froid, un module dynamique d'élasticité supérieur à celui du polyuréthane réticulé seul (c'est-à-dire ne contenant pas de polymère d'oxime) et il présente à chaud, audessus d'environ 100 °C, une flexibilité supérieure à celle du polyuréthane réticulé seul. Tout se passe, en fait, comme si le polymère de l'oxime jouait un rôle de plastifiant vis-à-vis du polymère réticulé de polyuréthane, bien que le terme de «plastifiant» ne soit pas approprié pour ce dernier produit.

Pour accroître les caractéristiques mécaniques, il est possible d'incorporer un agent réticulant pouvant réagir avec l'oxime vinylique libérée, de façon à passer d'un polymère linéaire à un réseau tridimensionnel. Pour cela, on utilise comme agent réticulant un monomère polyfonctionnel contenant, par molécule, au moins deux liaisons doubles réactives et pouvant se copolymériser avec l'oxime vinylique. Il est clair que l'on pourra utiliser de nombreux agents réticulants et que, selon le choix qualitatif et quantitatif de cet agent, on obtiendra des produits présentant des propriétés très variées. Dans tous les cas, il se produira un réseau polymérique tridimensionnel de polymère réticulé à base de poly (oxime-vinylique) et d'agent réticulant, ledit réseau étant imbriqué dans un autre réseau tridimensionnel de polyuréthane. Suivant les propriétés recherchées à basse et haute température, on utilisera entre environ 1 et environ 50% en poids d'agent réticulant par rapport au poids de l'oxime vinylique.

Parmi les agents réticulents, on peut citer les di ou triméthacrylate ou un composé de di, tri ou tétra allylique et, notamment:

- le diméthacrylate de bisphénol A éthoxylé,
- le diméthacrylate de l'éthylène glycol,
- le triméthacrylate de triméthylol propane,
- le triallyl cyanurate,
- le triallyl isocyanurate,
- le tétraallyl éthoxy éthane.

Les exemples non limitatifs ci-après illustrent l'invention.

Exemple 1

On prépare un prépolymère isocyanate en faisant réagir sur une mole de polyoxytétraméthylène glycol de masse moléculaire moyenne en nombre 2000 g, trois moles de diphényl méthane diisocyanate, soit 858 g.

La réaction a lieu en masse, sous agitation mécanique, à 80 °C pendant deux heures.

Après avoir ramené la température du milieu réactionnel à 40 °C, on ajoute 4 moles d'agent bloquant (736 g), en l'occurence l'oxime de la N-(1,1 diméthyl-3-oxobutyl)acrylamide (DAOX), en solution à 50% en poids dans la méthyl éthyl cétone.

On procède de façon progressive, de manière à ne pas réchauffer de façon trop importante le milieu réactionnel (T < 60 °C).

On peut s'assurer du blocage complet des fonctions isocyanates par spectroscopie infrarouge, en observant la disparition de la bande à 2250 $cm^{-1}$ caractéristique des fonctions isocyanates.

On ajoute ensuite deux moles d'isophorone diamine (340 g), deux moles de diméthacrylate du bisphénol A éthoxylé, par exemple commercialisé sous la marque DIACRYL 101 (1040 g) et 2% en poids d'amorceur [per-éthyl-2-hexanoate de bu-

tyl tertiaire (TBPEH)] par rapport aux vinyliques, soit 36 g.

Le mélange réactionnel peut être dilué par la méthyl éthyl cétone pour procéder à l'imprégnation d'un support, ou évaporé de façon à obtenir la résine pure.

On peut ainsi éliminer la méthyl éthyl cétone pendant 30 minutes à 70 °C puis procéder à la polymérisation, typiquement deux heures à 120 °C.

On obtient un produit dont on a mesuré le module d'élasticité en fonction de la température. les résultats sont donnés sur la figure unique où l'on a porté en ordonnée le module d'élasticité E (en N/m²) et en abcisse la température T (en degrés Celsius).

Sur cette figure, la courbe 1 représente les résultats obtenus avec la résine polyuréthane seule, la courbe 2 représente les résultats obtenus avec le produit du présent exemple.

On constate une nette amélioration du module d'élasticité du produit à température ambiante. On notera que l'allongement à la rupture des produits est, à température ambiante, supérieure à 200%. Enfin, les produits présentent un pouvoir amortissant.

Exemple 2

On prépare un prépolymère diisocyanate bloqué à partir de 1 mole de polyoxytétraméthylène glycol de masse 2000, 3 moles de diphényl méthane diisocyanate et 4 moles de DAOX, de la façon décrite dans le premier exemple.

On ajoute, ensuite, deux moles d'isophorone diamine (340 g) et 1,33 mole de triméthacrylate de triméthylol propane:

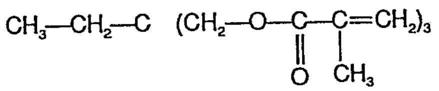

soit 449,4 g.

On ajoute, également 2% en poids par rapport aux vinyliques d'amorceur TBPEH, soit 23,7 g.

On peut utiliser la formulation sous forme diluée pour l'imprégnation ou obtenir la résine pure par évaporation de la méthyl éthyl cétone. Les valeurs de module de la résine après polymérisation de deux heures à 120 °C et 1 heure à 150 °C sont observées sur la figure, courbe 3.

Exemple 3

On prépare un prépolymère diisocyanate en faisant réagir sur une mole de polyoxytétraméthyle glycol de masse moyenne en nombre 1000, soit 1000 g, trois moles de diphényl méthane diisocyanate liquide, soit 858 g.

La réaction a lieu en masse, sous agitation mécanique, à 80 °C pendant deux heures.

Après avoir ramené la température du milieu réactionnel à 40 °C, on ajoute 4 moles d'agent bloquant (736 g), en l'occurence l'oxime de la diméthyl oxobutyl acrylamide (DAOX), en solution à 50% en poids dans la méthyl éthyl cétone.

On procède de façon progressive, de manière à ne pas réchauffer de façon trop importante le milieu réactionnel (T < 60 °C).

On peut s'assurer du blocage complet des fonctions isocyanates par spectroscopie infrarouge, en observant la disparition de la bande à 2250 cm⁻¹ caractéristique des fonctions isocyanates.

On ajoute ensuite deux moles d'isophorone diamine (340 g) et 1,33 mole de triméthacrylate de triméthylol propane, soit 449,4 g.

On ajoute, également, 2% en poids par rapport aux vinyliques d'amorceur per-éthyl 2 hexanoate de butyle tertiaire, soit 23,7 g.

On peut utiliser la formulation sous forme diluée pour l'imprégnation ou obtenir la résine pure par évaporation de la méthyl éthyl cétone. Les valeurs de module de la résine après polymérisation de deux heures à 120 °C et une heure à 150 °C sont observées sur la figure, courbe 4.

Les exemples données ci-dessus montrent aux spécialistes que, grâce à l'invention, on peut obtenir des produits polymères présentant des propriétés (à froid ou à chaud) très différentes et ayant donc des applications également différentes. On mentionnera, simplement, ci-après les principaux paramètres sur lequels on peut jouer pour obtenir des produits finaux présentant les propriétés souhaitées:

- paramètres liés aux polyuréthanes:

nature et longueur de chaîne du prépolymère,
taux des isocyanates du prépolymère,
nature de l'allongueur de chaîne (diamine),

- paramètres liés au polymère de l'oxime:

nature de l'oxime,
nature du polymère de l'oxime,
nature du coréticulant et degré de réticulation.

**Revendications**

1. Compositions polymères, caractérisées en ce qu'elles comportent:

- un polyuréthane, tel qu'obtenu par réaction (a) d'un allongeur de chaîne qui est une diamine primaire avec (b) un prépolymère contenant des groupes isocyanates terminaux à base d'un polyéther, polyester ou polybutadiène hydroxylé, dont les fonctions isocyanate sont bloquées par une cétoxime insaturée vinylique,
- un polymère de ladite cétoxime insaturée vinylique.

2. Compositions selon la revendication 1, caractérisées en ce que le polymère d'oxime insaturée est un polymère réticulé par utilisation d'un agent réticulant contenant, par molécule, au moins deux doubles liaisons.

3. Compositions selon l'une des revendications 1 et 2, caractérisées en ce que ladite oxime est un produit de formule:

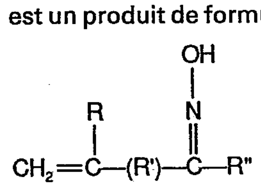

étant entendu que:

- R est, soit de l'hydrogène, soit un radical alkyle,
- R′ est une liaison simple ou un radical quelconque, notamment un radical aliphatique ou un radical amide..., ledit radical devant présenter les deux caractéristiques suivantes: ne pas comporter d'atomes ou de groupement d'atomes qui gêneraient la polymérisation de la liaison éthylénique et ne pas comporter d'atomes ou de groupement d'atomes qui empêcheraient la formation du radical oxime sur le carbon voisin,
- R″ est un radical quelconque, aussi choisi de façon à ne pas gêner la formation du radical oxime porté par le carbone voisin.

4. Compositions selon la revendication 3, caractérisées en ce que l'oxime est l'oxime de la N (1,1 diméthyl-3-oxobutyl)-acrylamide.

5. Compositions selon l'une des revendications 2 à 4, caractérisées en ce que l'agent réticulant est un di ou triméthacrylate ou un composé di, tri ou tétra allylique.

6. Procédé pour la préparation des compositions polymères selon l'une des revendications 1 à 5, caractérisé en ce que:
- on réalise le blocage des fonctions isocyanates libres d'un prépolymer polyuréthane à l'aide d'une cétoxime vinylique,
- on effectue ensuite l'allongement des chaînes dudit prépolymère à l'aide d'une diamine primaire, avec libération de l'oxime,
- on procède, simultanément, à la polymérisation de l'oxime en présence, de préférence, d'un catalyseur.

7. Procédé selon la revendication 6, caractérisé en ce que la polymérisation s'effectue en présence d'un agent réticulant.

8. Produit intermédiaire utilisé pour la réalisation de compositions polymères selon les revendications 3 à 5, caractérisée en ce qu'il est constitué d'un prépolymère de polyuréthane dont les fonctions isocyanates terminales ont été bloquées par une cétoxime de formule:

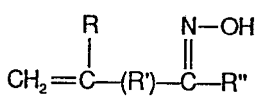

dans laquelle R, R′ et R″ ont les significations données dans la revendication 3.

9. Produit intermédiaire selon la revendication 8, caractérisée en ce que la cétoxime est l'oxime de la N(1,1-diméthyl-3-oxobutyl) acrylamide.

**Patentansprüche**

1. Polymere Zusammensetzungen, gekennzeichnet durch einen Gehalt an:
- einem Polyurethan, wie dem, das durch Umsetzung von
a) einem primären Diamin als Kettenverlängerer mit
b) einem Vorpolymer mit endständigen Isocyanatgruppen auf der Basis eines Hydroxylgruppen enthaltenden Polyethers, Polyesters oder Polybutadiens, dessen Isocyanat-Gruppen durch ein ungesättigtes Vinylketoxim blockiert sind, und
- einem Polymer des ungesättigten Vinylketoxims.

2. Zusammensetzungen nach Anspruch 1, dadurch gekennzeichnet, dass das ungesättigte Oximpolymer ein durch Verwendung eines Vernetzungsmittels mit mindestens zwei Doppelbindungen je Molekül vernetztes Polymer ist.

3. Zusammensetzungen nach Anspruch 1 oder 2, dadurch gekennzeichnet, dass das Oxim ein Produkt der Formel

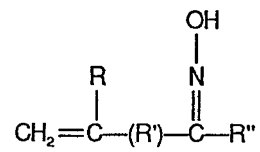

ist, wobei bedeuten:
- R Wasserstoff oder einen Alkylrest,
- R′ eine Einfachbindung oder einen beliebigen Rest, insbesondere einen aliphatischen Rest oder einen Amidrest, wobei der Rest die beiden folgenden Eigenschaften aufweisen muss: er darf keine Atome oder Atomgruppen aufweisen, die die Polymerisation der ethylenischen Bindung stören würden, und er darf keine Atome oder Atomgruppen aufweisen, die die Bildung des Oximrests am benachbarten Kohlenstoffatom verhindern würden,
- R″ einen beliebigen Rest, der auch so gewählt wird, dass er die Bildung des Oximrests auf dem benachbarten Kohlenstoffatom nicht stört.

4. Zusammensetzungen nach Anspruch 3, dadurch gekennzeichnet, dass das Oxim das Oxim von N-(1,1-dimethyl-3-oxobutyl)-acrylamid ist.

5. Zusammensetzungen nach einem der Ansprüche 2 bis 4, dadurch gekennzeichnet, dass das Vernetzungsmittel ein Di- oder Trimethacrylat oder eine Di-, Tri- oder Tetraallylverbindung ist.

6. Verfahren zur Herstellung der polymeren Zusammensetzungen nach einem der Ansprüche 1 bis 5, dadurch gekennzeichnet, dass
- die freien Isocyanatgruppen eines Polyurethan-Vorpolymers mit einem Vinylketoxim blockiert werden,
- die Kette des Vorpolymers mit einem primären Diamin unter Freisetzung des Oxims verlängert wird,
- gleichzeitig das Oxim in Gegenwart vorzugsweise eines Katalysators polymerisiert wird.

7. Verfahren nach Anspruch 6, dadurch gekennzeichnet, dass die Polymerisation in Gegenwart eines Vernetzungsmittels durchgeführt wird.

8. Zwischenprodukt, verwendet bei der Herstellung der polymeren Zusammensetzungen nach den Ansprüchen 3 bis 5, dadurch gekennzeichnet, dass es aus einem Polyurethan-Vorpolymer, dessen endständigen Isocyanatgruppen mit einem Ketoxim der Formel

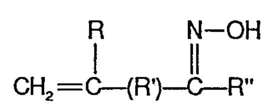

blockiert worden sind, in der R, R′ und R″ die in Anspruch 3 angegebene Bedeutung haben.

9. Zwischenprodukt nach Anspruch 8, dadurch gekennzeichnet, dass das Ketoxim das Oxim von N-(1,1-dimethyl-3-oxobutyl)-acrylamid ist.

**Claims**

1. Polymer compositions characterized in that they comprise:
- a polyurethane, such as is obtained by reaction of (a) a chain lengthener which is a primary diamine, with (b) a prepolymer, containing terminal isocyanate groups, based on a hydroxylic polybutadiene, polyester or polyether, of which the isocyanate functions are blocked by an unsaturated vinyl ketoxime, and
- a polymer of the said unsaturated vinyl ketoxime.

2. Compositions according to Claim 1, characterized in that the unsaturated oxime polymer is a polymer crosslinked by use of a crosslinking agent containing at least two double bonds per molecule.

3. Compositions according to one of Claims 1 and 2, characterized in that the said oxime is a product of the formula:

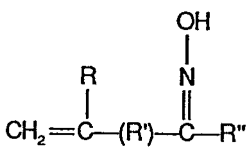

it being understood that:
- R is either hydrogen or an alkyl radical,
- R′ is a simple bond or any radical, especially an aliphatic radical or an amide radical etc., the said radical having to exhibit the following two characteristics: it must not contain atoms or groups of atoms which would interfere with the polymerization of the ethylenic bond and it must not contain atoms or groups of atoms which would prevent the formation of the oxime radical on the adjacent carbon, and
- R″ is any radical, also chosen in such a way as not to interfere with the formation of the oxime radical carried on the adjacent carbon.

4. Compositions according to Claim 3, characterized in that the oxime is the oxime of N-(1,1-dimethyl-3-oxobutyl)-acrylamide.

5. Compositions according one of Claims 2 to 4, characterized in that the crosslinking agent is dimethacrylate or trimethacrylate or a diallyl, triallyl or tetraallyl compound.

6. Process for the preparation of polymer compositions according to one of Claims 1 to 5, characterized in that:
- the free isocyanate functions of a polyurethane prepolymer are blocked by means of a vinyl ketoxime,
- thereafter the chains of the said prepolymer are lengthened by means of a primary diamine, with liberation of the oxime, and
- simultaneously, the oxime is polymerized in the presence of, preferably, a catalyst.

7. Process according to Claim 6, characterized in that the polymerization is carried out in the presence of a crosslinking agent.

8. Intermediate product used for producing polymer compositions according to Claims 3 to 5, characterized in that it consists of a polyurethane prepolymer of which the terminal isocyanate functions have been blocked by a ketoxime of the formula:

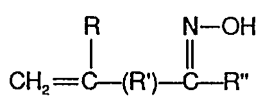

in which R, R′ and R″ have the meanings given in Claim 3.

9. Intermediate product according to Claim 8, characterized in that the ketoxime is the oxime of N-(1,1-dimethyl-3-oxobutyl)-acrylamide.

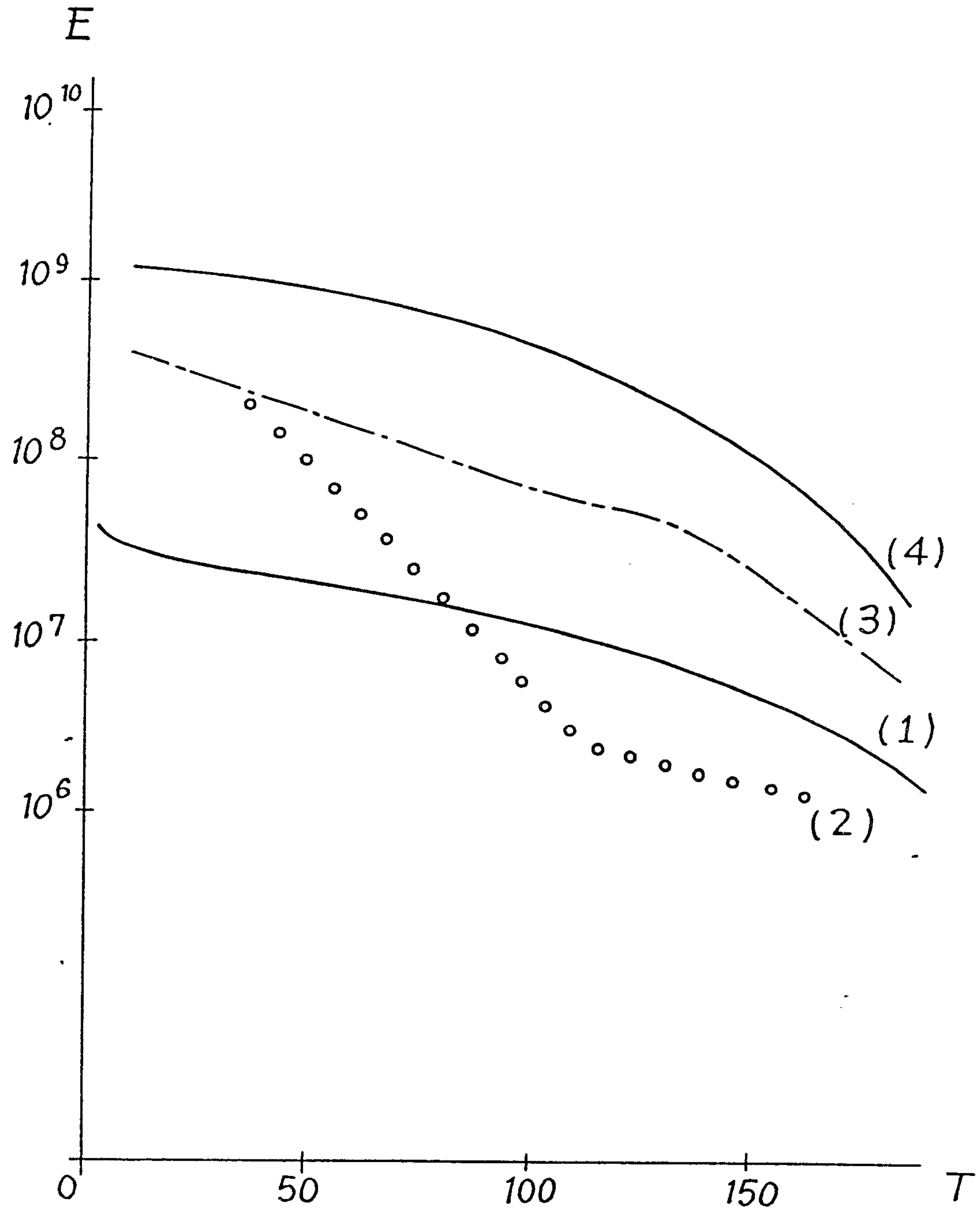
E
$10^{10}$
$10^9$
$10^8$
$10^7$
$10^6$
(4)
(3)
(1)
(2)
0
50
100
150
T